Europäisches Patentamt

(19) European Patent Office

Office européen des brevets

(11) Veröffentlichungsnummer: **0 040 434**
**B1**

(12) # EUROPÄISCHE PATENTSCHRIFT

(45) Veröffentlichungstag der Patentschrift:
13.11.85

(51) Int. Cl.⁴: **G 09 F 13/18,** B 60 Q 3/04

(21) Anmeldenummer: 81103878.5

(22) Anmeldetag: 20.05.81

(54) Beleuchtungsvorrichtung für Anzeigeanordnungen.

(30) Priorität: 21.05.80 DE 3019419

(43) Veröffentlichungstag der Anmeldung:
25.11.81 Patentblatt 81/47

(45) Bekanntmachung des Hinweises auf die Patenterteilung:
13.11.85 Patentblatt 85/46

(84) Benannte Vertragsstaaten:
DE FR GB IT

(56) Entgegenhaltungen:
BE - A - 864 070
DE - A - 1 655 760
FR - A - 2 317 719
US - A - 3 780 463
US - A - 4 141 058

(73) Patentinhaber: Patent-Treuhand-Gesellschaft für elektrische Glühlampen mbH, Hellabrunner Strasse 1, D-8000 München 90 (DE)

(72) Erfinder: Endres, Ludwig, Dipl.-Phys., Farmerstrasse 14, D-8031 Gröbenzell (DE)
Erfinder: Nellis, Ruald, Quiddestrasse 43, D-8000 München 83 (DE)

## Beschreibung

Die Erfindung betrifft eine Beleuchtungsvorrichtung für Anzeigeanordnungen, insbesondere in Kraftfahrzeugen, mit transparenten Anzeigefeldern, die mittels Durchleuchtung erkennbar gemacht werden, bestehend aus einem Lampen enthaltenden Hohlkörper mit einer Strahlungsaustrittsseite und mehreren nicht strahlungsabgebenden Seiten, wobei die nach innen gerichteten Flächen der letzteren im wesentlichen strahlungsreflektierend sind und die Tiefe des Hohlkörpers, die durch den Abstand zwischen Strahlungsaustrittsseite und gegenüberliegender Seite bestimmt ist, um ein Mehrfaches kleiner als dessen Breite bzw. Höhe ist.

Die Beleuchtungsvorrichtung soll insbesondere zur Ausleuchtung von Flüssigkristallanzeigen (LCD) dienen, die jetzt verstärkt anstelle von analogen Zeigeranzeigen in Armaturenbrettern Anwendung finden.

In der EP-A-0 034 744 ist eine solche Beleuchtungsvorrichtung vorgeschlagen, wobei der Strahlungsaustritt aus der Beleuchtungsvorrichtung durch Aussparungen in der Vorderseite eines Hohlkörpers erfolgt. Durch die Vorgabe der Lage und Größe der Aussparungen ist die Beleuchtungsvorrichtung an die jeweilige Anzeigeanordnung gebunden und somit nicht universell einsetzbar.

Andererseits sind aus der Fr-A-2 317 719, der US-A-3 780 463 und der US-A-4 141 058 sowie der BE-A-864 070 Beleuchtungsvorrichtungen bekannt, die alle als wesentlichen Bestandteil eine Platte aus Glas oder Plastik aufweisen, die für die Übertragung des Lichts verantwortlich ist. Die Lampen befinden sich außerhalb der Platte, wobei Einspeisungshilfen in Form von Lichtleitern vorgesehen sein können. Solche Beleuchtungsvorrichtungen besitzen eine hohe Gleichmäßigkeit in der Lichtabgabe, aber durch die Einspeisung von außen geht ein Teil des Lichts verloren, so daß der Wirkungsgrad solcher Vorrichtungen klein ist. Ein Einbau von Lampen direkt in die transparente Platte würde zwar den abgegebenen Lichtstrom erhöhen, andererseits aber bei hellen Lampen (wie sie für die LCD-Ausleuchtung benötigt werden) mit großer Wärmeabgabe zu Temperaturproblemen führen.

Der Erfindung liegt die Aufgabe zugrunde, eine gleichmäßige und intensiv helle Durchleuchtung der Anzeigefelder der Anzeigeanordnungen zu erreichen. Die Beleuchtungsvorrichtung sollte dabei so ausgebildet sein, daß sie nicht an eine bestimmte Gestaltung der Anzeigeanordnungen gebunden ist und so einen universellen Einsatz ermöglicht.

Die Beleuchtungsvorrichtung mit den im Oberbegriff des Hauptanspruchs angegebenen Merkmalen ist dadurch gekennzeichnet, daß der Hohlkörper vollständig geschlossen ist und bei der Strahlungsaustrittsseite für die von den Lampen erzeugte Strahlung das Verhältnis des Reflexionskoeffizienten zum Transmissionskoeffizienten größer als 1 ist, so daß über die gesamte Fläche dieser Seite eine gleichmäßige Strahlungsabgabe erfolgt.

Durch den vollständig geschlossenen Hohlkörper und die Reflexion der Strahlung an allen Innenflächen der Seiten wird trotz der geringen Tiefe eine Mehrfachreflexion der Strahlung im Hohlkörper erzielt. Auf diese Weise ist es möglich, mit wenigen Strahlungsquellen eine gleichmäßige Ausleuchtung der Strahlungsaustrittsseite zu erreichen.

Vorteilhaft liegt von der gesamten von der Strahlungsaustrittsseite reflektierten und transmittierten Strahlung der reflektierte Anteil zwischen 80 und 95% und der transmittierte Anteil zwischen 20 und 5%. Die Absorption bzw. Adsorption ist in diesem Fall außer Betracht gelassen, da sie bei den heutzutage verwendeten Materialien unter 5% der Gesamtstrahlung gehalten werden kann. Außerdem weisen die nicht strahlungsabgebenden Seiten des Hohlkörpers vorteilhaft eine Beschichtung auf, die mindestens 80%, besser 90% der auf sie auftreffenden Strahlung reflektiert. Durch eine solche Ausgestaltung nimmt die Mehrfachreflexion im Hohlkörper weiter zu und es wird eine noch gleichmäßigere Ausleuchtung der Strahlungsaustrittsseite erzielt.

Als Lampen für die Bestückung der Beleuchtungsvorrichtung kommen insbesondere Halogenglühlampen bzw. Entladungslampen kompakter Bauweise in Betracht, denn nur diese Lampen besitzen neben der für die Ausleuchtung von LCD-Anzeigen notwendigen Leuchtdichte auch genügend kleine Abmessungen, so daß die Mehrfachreflexion im Hohlkörper nicht gestört und gleichzeitig eine geringe Bautiefe der Vorrichtung erlangt wird. Der Hohlkörper sorgt neben der Mehrfachreflexion auch dafür, daß die für diese Lampen höchstzulässigen Umgebungstemperaturen (für eine optimale Lichtausbeute) nicht überschritten werden.

Als Licht reflektierende Schicht für die nicht Strahlung abgebenden Seiten kommt ein weißer, nicht vergilbender, aus Literatur und Photometrie bekannter Anstrich in Betracht. Die Strahlungsaustrittsseite besteht vorteilhaft aus Kunststoff mit einem sehr geringen Absorptionsvermögen. Zur Erreichung des entsprechenden Reflexions- bzw. Transmissionsgrades trägt die Seite beispielsweise eine entsprechende Beschichtung festgelegter Dicke oder es sind Weißpigmente dem Material der Seite beigemengt.

In einer weiteren Ausführungsform kann die Beleuchtungsvorrichtung anstelle der sichtbares Licht aussendenden Entladungslampen auch Entladungslampen kompakter Bauweise enthalten, die UV-Strahlung emittieren. In diesem Fall muß der Hohlkörper auf seinen inneren Flächen zusätzlich eine die UV-Strahlung in sichtbare Strahlung umwandelnde Beschichtung aufweisen.

Bei Armaturenbrettern ist wegen der zunehmenden Kompaktheit der Autos die Forderung nach geringer Tiefe ein wesentlicher Gesichtspunkt. Ein bedeutender Vorteil der erfindungsgemäßen Beleuchtungsvorrichtung liegt in der geringen Tiefe des Hohlkörpers, die dadurch sehr raumsparend wird und so leicht im Armaturenbrett unterzubringen ist. Selbst bei einer Tiefe der Vorrichtung von kleiner gleich 2 cm wird eine ausreichende Mehrfachreflexion der Strahlung erreicht, so daß eine gleichmäßige Lichtabgabe über die gesamte Fläche der Strahlungsaustrittsseite erfolgt. Außerdem können selbst mit wenigen punktförmigen Lampen hinreichend hohe und gleichmäßige Leuchtdichten auf der gesamten Strahlungsaustrittsseite erzielt werden.

Der Hohlkörper mit eingebauten Lampen wird zweckmäßigerweise als Einheit mit Vorrichtungen, z. B. Schnappverschlüssen versehen, die eine Montage ohne besondere Hilfsmittel zulassen.

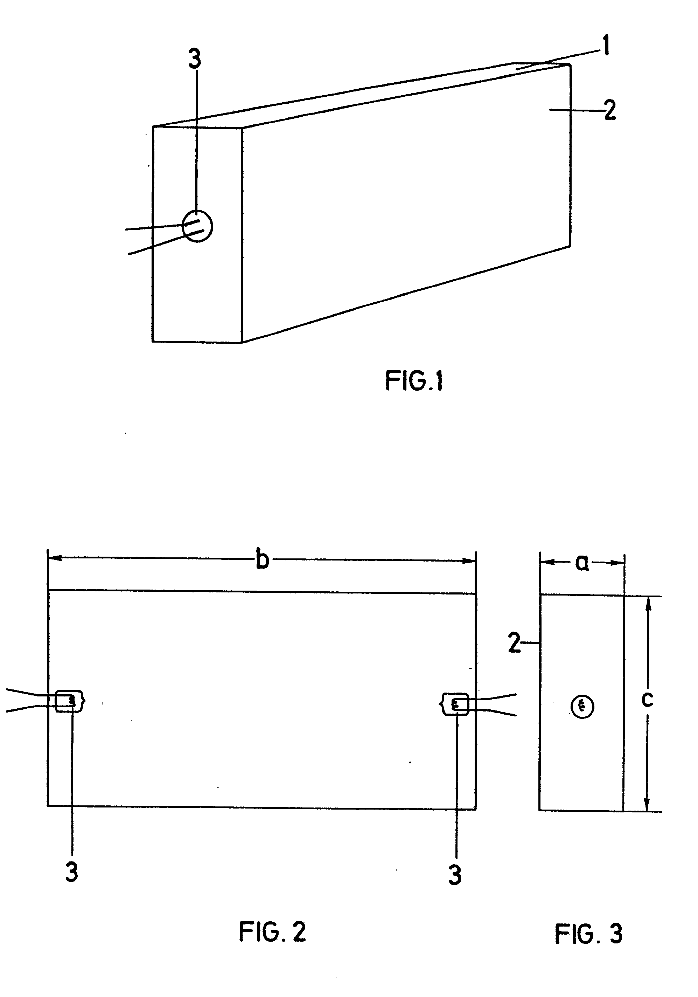

Ein Ausführungsbeispiel der Erfindung ist in den Fig. 1 bis 3 dargestellt und wird im folgenden näher beschrieben.

Fig. 1 zeigt eine perspektivische Ansicht des Hohlkörpers;

Fig. 2 die Rückansicht des Hohlkörpers bei abgenommener Rückwand;

Fig. 3 den Querschnitt des Hohlkörpers.

Der Hohlkörper 1 ist kastenförmig ausgebildet. Die teildurchlässige Vorderseite 2 besteht aus mit weißem Pigment eingetrübten oder mattweiß beschichteten Polyester mit einem Reflexionsgrad von 90% und einem Transmissionsgrad größer 5%. Die übrigen Seiten bestehen aus Polyester, wahlweise aus Blech. Die Tiefe a des Hohlkörpers 1 beträgt 20 mm, seine Breite b 200 mm, seine Höhe c 100 mm. Die Innenflächen der Seiten des Hohlkörpers 1, mit Ausnahme der Vorderseite 2, sind mattweiß beschichtet, bzw. das Material des Hohlkörpers ist mit weißen Pigmenten stark eingefärbt, so daß ein diffus reflektierender Reflexionsgrad größer gleich 95% erreicht wird. Als Licht- bzw. Strahlungsquellen 3 sind zwei Halogenglühlampen von je 5 W in dem Hohlkörper 1 integriert. Auf die Vorderseite 2 wird die Flüssigkeitskristall-Anzeige, evtl. unter Zwischenlegung einer Maske mit gewünschten Anzeigesymbolen, angebracht (nicht dargestellt), die somit von der in dem Kasten durch Mehrfachreflexion auf die Vorderseite 2 konzentrierten Strahlung beleuchtet wird.

**Patentansprüche**

1. Beleuchtungsvorrichtung für Anzeigeanordnungen, insbesondere in Kraftfahrzeugen, mit transparenten Anzeigefeldern, die mittels Durchleuchtung erkennbar gemacht werden, bestehend aus einem Lampen (3) enthaltenden Hohlkörper (1) mit einer Strahlungsaustrittsseite (2) und mehreren nicht strahlungsabgebenden Seiten, wobei die nach innen gerichteten Flächen der letzteren im wesentlichen strahlungsreflektierend sind und die Tiefe (a) des Hohlkörpers (1) die durch den Abstand zwischen Strahlungsaustrittsseite (2) und gegenüberliegender Seite bestimmt ist, um ein Mehrfaches kleiner als dessen Breite bzw. Höhe ist, dadurch gekennzeichnet, daß der Hohlkörper (1) vollständig geschlossen ist und bei der Strahlungsaustrittsseite (2) für die von den Lampen (3) erzeugte Strahlung das Verhältnis des Reflexionskoeffizienten zum Transmissionskoeffizienten größer als 1 ist, so daß über die gesamte Fläche dieser Seite (2) eine gleichmäßige Strahlungsabgabe erfolgt.

2. Beleuchtungsvorrichtung nach Anspruch 1, dadurch gekennzeichnet, daß von der gesamten von der Strahlungsaustrittsseite (2) reflektierten und transmittierten Strahlung der reflektierte Anteil zwischen 80 und 95% und der transmittierte Anteil zwischen 20 und 5% liegt.

3. Beleuchtungsvorrichtung nach Anspruch 1, dadurch gekennzeichnet, daß die nicht strahlungsabgebenden Seiten des Hohlkörpers (1) eine Beschichtung aufweisen, die mindestens 80% der auf sie auftreffenden Strahlung reflektiert.

4. Beleuchtungsvorrichtung nach einem oder mehreren der Ansprüche 1 bis 3, dadurch gekennzeichnet, daß der Hohlkörper eine oder mehrere UV-emittierende Lampen enthält.

5. Beleuchtungsvorrichtung nach Anspruch 4, dadurch gekennzeichnet, daß der Hohlkörper auf den inneren Flächen der Seiten zusätzlich eine die UV-Strahlung in sichtbare Strahlung umwandelnde Beschichtung aufweist.

6. Beleuchtungsvorrichtung nach Anspruch 1, dadurch gekennzeichnet, daß die Tiefe (a), die durch den Abstand zwischen Strahlungsaustrittsseite (2) und gegenüberliegender Seite bestimmt ist, kleiner gleich 2 cm ist.

**Claims**

1. Illuminated display structure, particularly for vehicles, having transparent indicating panels rendered discernible by through illumination and comprising a hollow box (1) that contains lamps (3) and is provided with a radiation emission side (2) and several non-radiation-emitting sides, whereby the inwardly facing surfaces of the latter are substantially radiation reflecting, and the depth (a) of the hollow box (1) that is determined by the spacing between the radiation emission side (2) and the opposite side is several times smaller than the width or height thereof, characterized in that the hollow box (1) is completely closed and, at the radiation emission side (2), the radiation generated by the lamps (3) has a ratio of reflection coefficient to transmission coefficient of higher than one such that uniform radiation emission is effected over the entire surface of side (2).

2. Illuminated display structure as claimed in claim 1, characterized in that from the entire radiation reflected and transmitted by the radiation emission side (2) the reflected proportion is between 80 und 95% and the transmitted proportion is between 20 and 5%.

3. Illuminated display structure as claimed in claim 1, characterized in that the non-radiation-emitting sides of the hollow box (1) comprise a coating that reflects at least 80% of the radiation impinging thereon.

4. Illuminated display structure as claimed in one or several of the claims 1 to 3, characterized in that the hollow box comprises one or several UV-emitting lamps.

5. Illuminated display structure as claimed in claim 4, characterized in that the hollow box is provided on the internal side surfaces with a coating converting the UV radiation into visible radiation.

6. Illuminated display structure as claimed in claim 1, characterized in that the depth (a) that is determined by the spacing between the radiation emission side (2) and the opposite side is up to 2 cm.

**Revendications**

1. Dispositif d'éclairage pour panneaux d'affichage, notamment dans des véhicules automobiles, comportant des zones d'affichage transparentes identifiables en étant éclairées par transparence, consistant en un corps creux (1) qui renferme des lampes (3) et comprend une face (2) de sortie du rayonnement et plusieurs faces ne diffusant pas de rayonnement et dont les surfaces tournées vers l'intérieur sont sensiblement réflectrices du rayonnement, la profondeur (a) du corps creux (1), déterminée par la distance entre la face (2) de sortie du rayonnement et la face opposée, étant plusieurs fois plus petite que la largeur ou que la hauteur de ce corps creux, respectivement, caractérisé par le fait que le corps creux (1) est intégralement fermé et que, sur la face (2) de sortie du rayonnement engendré par les lampes (3), le rapport entre le coefficient de réflexion et le coefficient de transmission est supérieur à 1, de sorte qu'une diffusion uniforme du rayonnement s'opère sur toute la superficie de cette face (2).

2. Dispositif d'éclairage selon la revendication 1, caractérisé par le fait que, dans la totalité du rayonnement réfléchi et transmis par la face (2) de sortie de ce rayonnement, la part réfléchie est comprise entre 80 et 95% et la part transmises est comprise entre 20 et 5%.

3. Dispositif d'éclairage selon la revendication 1, caractérisé par le fait que les faces du corps creux (1) qui ne diffusent pas de rayonnement présentent un revêtement réfléchissant au moins 80% du rayonnement qui lui est incident.

4. Dispositif d'éclairage selon l'une ou plusieurs des revendications 1 à 3, caractérisé par le fait que le corps creux renferme une ou plusieurs lampes émettrices d'UV.

5. Dispositif d'éclairage selon la revendication 4, caractérisé par le fait que le corps creux présente en plus, sur les surfaces internes de ses côtés, un revêtement qui convertit le rayonnement UV en un rayonnement visible.

6. Dispositif d'éclairage selon la revendication 1, caractérisé par le fait que la profondeur (a), déterminée par la distance entre la face (2) de sortie du rayonnement et la face opposée, est inférieure ou égale à 2 cm.

FIG.1

FIG. 2

FIG. 3